# EUROPEAN PATENT SPECIFICATION

(11) **EP 1 175 756 B1**
(45) Date of publication and mention of the grant of the patent: **07.12.2005**
(21) Application number: 00920983.4
(22) Date of filing: 09.05.2000
(51) Int. Cl.: H04L 12/56

(54) **LONGEST MATCHING PREFIX LOOKUP**
LÄNGENTESTVERGLEICH IN PRÄFIXNACHSCHLAGTABELLEN
RECHERCHE DES PREFIXES DE CORRESPONDANCE LES PLUS LONGS DANS DES TABLES

(30) Priority: 12.05.1999 EP 99810421
(43) Date of publication of application: 30.01.2002
(73) Proprietor: International Business Machines Corporation, Armonk, N.Y. 10504 (US)
(72) Inventor: DROZ, Patrick, CH-8803 Rueschlikon (CH); VAN LUNTEREN, Jan, CH-8134 Adliswil (CH)
(74) Representative: Klett, Peter Michael
(86) International application number: PCT/IB2000/000596
(87) International publication number: WO 2000/070832

(56) References cited:
- WO-A-99/14906
- BELL T ET AL: "LONGEST-MATCH STRING SEARCHING FOR ZIV-LEMPEL COMPRESSION" SOFTWARE PRACTICE & EXPERIENCE,GB,JOHN WILEY & SONS LTD. CHICHESTER, vol. 23, no. 7, 1 July 1993 (1993-07-01), pages 757-771, XP000655855 ISSN: 0038-0644

## Description

### Field of Invention

Present invention is related to longest matching prefix lookup, in particular for determining, in a switching node, an output or forwarding route in response to a given search argument, such as an IP address.

### Background of Invention

In modem communication networks, in particular the Internet, many users are connected to the network for exchanging addressed messages (or packets). Transmission links of the network are interconnected by switching centers or routing nodes (forwarding nodes) which, in response to the address of a received message (packet), forward this message to a selected one of the outgoing links. Thus, they have to route each packet by evaluating its address. This is also the case for message transmission in OSI, ATM, and other communication networks.

The problems of todays networks are (a) the great number of different users or addresses in the system, and (b) the tremendous number of messages (packets) to be transmitted. A forwarding node (routing center) in the Internet may have to dispatch about one million messages per second.

Another challenge is the provision of differently sized "domains" of addresses. Each of the addresses used may have a fixed total length (e.g. 32 bits); whole groups of addresses having a common "prefix" are assigned to the same domain and thus require the same routing, e.g. all addresses with prefix "4.22/16". One problem is that these domains and thus the prefixes to be considered during evaluation for routing in many systems (e.g. the Internet) have different sizes. Another problem is that there may be exceptions, i.e. the addresses of subdomains of a main domain may require different routings than the majority of addresses of the respective main domain. This requires "filtering out" those particular addresses during routing. For example, if most of the users with addresses of the group 4.22.xxx.xxx (4.22/16) are located in the same area, the addresses of subdomain 4.22.48.xxx ..... 4.22.55.xxx (4.22.48/20) and the addresses of another, even smaller subdomain 4.22.17.192 ..... 4.22.17.255 (4.22.17.192/26) may require routing through other links because the respective recipients (users) are located in another region.

This leads to the technique of longest matching prefix (or best matching prefix) routing which requires a respective evaluation of addresses in each forwarding node (routing center).

Several techniques were developed for effecting longest matching prefix routing. Most are based on the use of hierarchical tree like structures. In such trees, information on the output link or route to be taken (e.g. a next-hop pointer) is stored in a leaf (exit point / end point) of the tree, while the path through the tree is determined by the addresses evaluated. To find the correct path, i.e. to determine the branching (in each node of the tree), each address (or portions thereof) are either (a) compared in each node to address information stored there, or (b) used to directly (or indirectly) control the branching, i.e. select the next partial path to be taken.

In any case, no matter which technique is used, the following must be achieved:
(1) address evaluation and route determination must be done in a time interval that corresponds to the average time available in the worst case (i.e. in high traffic situations) for each message (packet);
(2) each address evaluation should require as few storage accesses or processing operations as possible; and
(3) the storage space required for the tables (data bases) should be as small as possible.
While a solution may be a compromise between (2) an (3), the first criterion must be met in any case to avoid undue delays or even clogging of a routing node.

A further aspect for designing such routing sytems is its flexibility, i.e. the possibility to adapt the structure to changing domain sizes and address distributions in the system.

### Known Approaches

Several methods and systems were suggested for finding the longest matching prefix of a given search argument, and to produce a corresponding (assigned) pointer or output identification.

WO 99/14906 discloses a method and system for fast routing lookups. In a method of IP routing lookup in a routing table, comprising entries of arbitrary length prefixes with associated next-hop information in a next-hop table, to determine where IP datagrams are to be forwarded, a representation of the routing table is stored, in the form of a complete prefix tree (7), defined by the prefixes of all routing table entries. Further, a representation of a bit vector (8) comprising data of a cut through the prefix tree (7) at a current depth (D), and an array of pointers, comprising indices to the next-hop table and to a next-level chunk, are stored. Said bit-vector (8) is divided into bit-masks and a representation of the bit-masks is stored in a maptable. Then, an array of code words, each encoding a row index into the maptable and a pointer offset, and an array of base addresses are stored. Finally, the lookup is performed. This scheme does not support fast incremental updates resulting in low update rates.

T- Bell and D. Kulp present in the article "Longest-match String Searching for Ziv-Lempel Compression", SOFRWARE PRACTICE & EXPERIENCE, GB, JOHN WILEY & SONS LDT., CHICHESTER, vol. 23, no. 7, 12 July 1993, pages 757-771, XP000655855, ISSN: 0038-0644, eight data structures that can be used to accelerate the searching, including adaptations of four methods normally used for exact matching searching. Hashing, binary search trees, splay trees and the Boyer-Moore searching algorithm are traditionally used to search for exact matches, but it is shown how these can be adapted to find longest matches. These algorithms require more memory to store a routing table of a given size.

A paper "Faster IP Lookups using Controlled Prefix Expansion" by V.Srinivasan and G.Varghese, published in Perform.Eval.Rev. (USA) Vol.26, No.1, June 1998 pp.1-10, describes a method in which only a selected number of different prefix lengths is allowed, and in which given prefixes of addresses are expanded in length if they do not have one of the selected lengths. The search database is designed to have several levels of tables, each level corresponding to one of the prefix lengths. Then, an incremental search can be made, using on each level only a portion of the given search address. The table entries on each level contain pointers to the next table to be searched with the next portion of the search address.
This approach allows a reduction in storage space required and in the number of operations necessary. However, it does not allow to directly compare a segment of the search address to a test value to enable an immediate decision when a particular prefix is present. Furthermore, the suggested method requires the expansion of prefixes instead of directly using all prefixes in their given length. Due to the given structure based on preselected lengths, changes in the selected lengths require an adaptation of the whole structure of the database. Also, though different sizes of search address segments can be used on the different levels, only one segment length is possible per level.

In U.S.Patent 5,781,772 (Wilkinson et al.) "Compressed Prefix Matching Database Searching" a technique is disclosed for reducing the length of searches and the storage requirements, by pointer compression (i.e. eliminating pointers to NIL nodes), and by path compression (eliminating nodes contributing no additional relevant information, and storing the associated prefix digit or digits as path digit string which is compared to respective portions of the given address). However, the method provides only a sectioning of search addresses into fixed length segments (or multiples thereof), and it does not appear to provide a combination of indexed pointer addressing of node entries and comparison of selectable-length address parts to stored values.

In a paper by T.Harbaum, D.Meier, M.Zitterbart and D.Brokelmann "Hardware-Assist for IPv6 Routing Table Lookup", published in Proc. Internat.Symposium on Broadband Networks (SYBEN'98), Zurich/Switzerland May 1998, a binary tree search method is described for finding a best match for different-length prefixes of IP addresses. The method allows comparison of variable-length portions of address prefixes to stored values to enable a compacted search data base. However, only binary search decisions are provided, and therefore in many cases multiple comparisons and decisons are required for the same output route.

Another approach for handling different prefix lengths in a matching search is described in a paper by P.Gupta, S.Lin and N.McKeown "Routing Lookups in Hardware at Memory Access Speeds", published in Proc. IEEE INFOCOM'98, 1998, Vol.3 pp.240-247. The disclosed method provides, for 32-bit addresses, two tables. One is addressed by the first 24 bits and has 2²⁴ entries, one for each of the 24-bit prefixes. If the relevant prefix has less than or at most 24 bits, then the respective entry contains the pointer to the associated output or link. If the relevant prefix is longer, then the entry contains a pointer to a second table which is then addressed by combining the pointer and the remaining eight bits of the prefix (after expansion to 32 bits). The entries of the second table contain the pointers to the outputs/links for the longer prefixes. An additional intermediate table allows to reduce the size of the second table in specific situations (for prefixes shorter than 32 bits). This method requires only one, two, or three storage accesses per address match, but needs a large storage capacity, and addition or deletion of a prefix necessitates the changing of many entries.

U.S.Patent 5,386,413 (McAuley et al.) "Fast Multilevel Hierarchical Routing Table Lookup Using Content Addressable Memory" allows fast simultaneous lookup for different prefix segments of a given address, but requires a content-addressable storage.

None of these disclosed methods and systems allows to use search argument segments of selectable length partially as testing values and partially as addressing indexes in a flexible combination, for finding longest matching prefixes in a multiple-table structure having entries with varying, different access criteria.

### Objects of the Invention

It is the object of the invention to devise a method and data structure design for finding a longest matching prefix for a given input address or search argument, in a multiple-level arrangement of stored tables, which requires only a few lookup operations per search, has moderate storage requirements, and allows a flexible adaptation of the stored data structure to the distribution of used prefixes in a system.

The invention for achieving this object is defined in the claims. It allows, in particular, the use of variable-length segments of the given search argument as either test values or addressing indexes, and also a combination of testing followed by indexed accessing with such variable-length segments, during the lookup procedure for detection of longest matching prefixes and their assigned output indications.

With the invention, it is possible to optimally adapt the used node table data structure and the search procedure for longest matching prefixes, to the actual distribution of prefixes over the whole address space, i.e. to use different structures depending on the fact whether there is a sparsed or clustered distribution.

Depending on the frequency of access of particular prefixes, the search path for the most frequently used prefixes can be optimized by giving them a treatment that shortens the search, whereas for rarely used prefixes a somewhat lengthier search can be allowed to gain other advantages, e.g. saving of storage space. The invention enables, due to the possible direct comparison of a long address segment to a stored test value, a fast completion of the search for specific prefixes. Furthermore, when using the invention it is possible with a single lookup operation to select between several (more than two) choices.

The invention also provides for two-stage addressing of entries, i.e. a node table is selected by a table base pointer, and the entry selection within the table can be done by an offset in response to a test result or an index operation, so that fast and flexible moving between entries is possible.

The invention also allows the use of constant-size entries in the node tables wich simplifies the data structure and access to as well as updating of entries.

Finally, providing a reuse function in a system using the invention offers the possibility to first make a test on a long segment of the search argument and then, depending on the result, to do a subsequent finer evaluation in smaller steps.

Embodiment examples of the invention are described in the following with reference to drawings.

### List of Drawings

Fig.1 shows a first, general embodiment example of the invention.

Fig.2 is a flow diagram for the embodiment of Fig.1 showing the different possible steps in evaluating a search argument.

Fig.3 illustrates a second example of an embodiment of the invention, in which test values are not separately stored but within respective table entries.

Fig.4 shows a third example of an embodiment in which portions of search arguments (IP addresses) which were already evaluated can be reused again.

Fig.5 (5A and 5B) illustrates the generation of a node table structure adapted to a given set of different prefix values.

Fig.6 (6A and 6B) shows the generation of an optimized node table structure on the basis of the case shown in Fig.5.

Fig.7 illustrates the selection of test values and indexes and the resulting branching scheme for the table structure generation procedure of Fig.5.

Fig.8 illustrates the selection of test values and indexes and the resulting branching scheme for the table structure generation procedure of Fig.6.

### Detailed Description

In the following, three examples of an embodiment of the invention are described (one basic, two variations). In a final section, an example of an optimized data structure is given, showing how such a data structure can be generated and optimized for a given set of prefixes of search arguments.

It is important to note that selectable portions of the search argument of variable length are used either as index (value) for selecting/accessing node table entries, or as test arguments to be compared to stored test values, but that both possibilities are used in combination to adapt the search procedure to the existing or expected distribution of the occurring prefixes. This allows an optimization with respect to either processing speed, number of operations, or the storage requirements for the search (lookup) data base. Furthermore, for accessing any entry in the search data base, full addressing is not required. Rather, a table base pointer is used for selecting the respective node table, and access within the table can then be effected using an offset value (from the base address of the table), or the result of a test.

Following terms and abbreviations are used in the subsequent description:
* search argument: an IP address or packet address or keyword etc.
* node table: a table of entries each containing search information or an output route information (the node tables are arranged in multiple successive levels)
* index: a value used for determining the offset from the base address when accessing node table entries
* offset value: a value indicating the distance between the start address of a node table and the location of an entry to be accessed
* table base pointer: a pointer indicating the start (address) of a node table = PTR
* end indicator: an indication in a last entry in a search path = END; either an output indicator or a stop indicator not leading to an output (may be an empty entry = NIL)
* output indicator: a pointer to the selected output route (e.g. a Next Hop Pointer = NHP) * test value: a bit sequence, stored in a table entry, to be compared to a portion of a search argument = TV
* test result: the result of the comparison between a test value and a test argument (selected portion of search argument); this is a binary value (match / no match, or 1 / 0)

### First (Basic) Example of an Embodiment

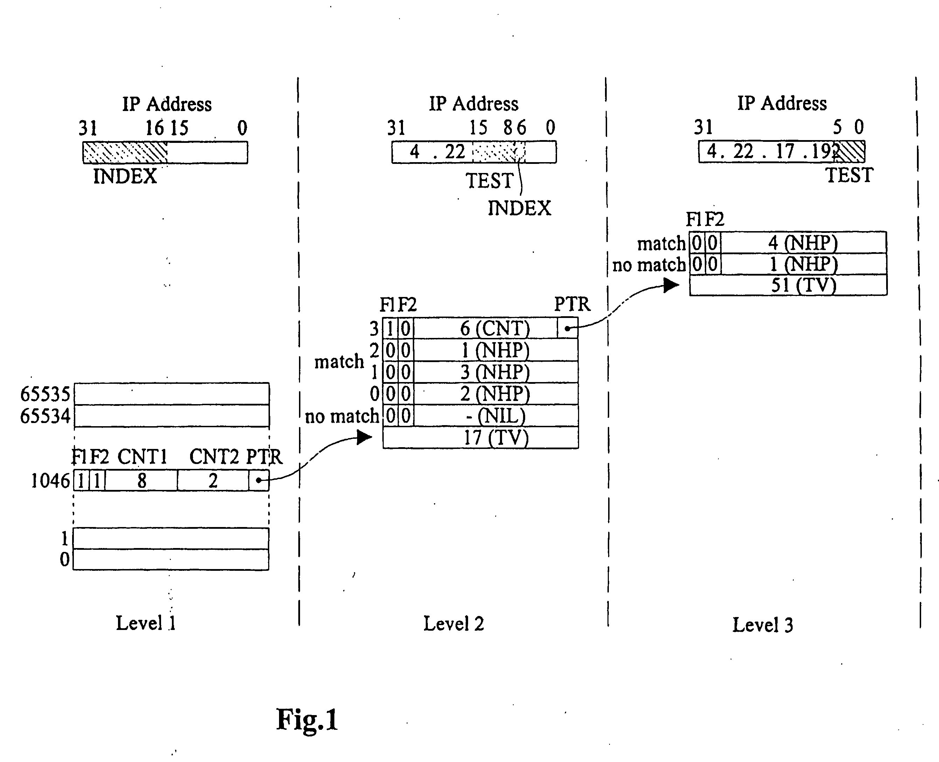

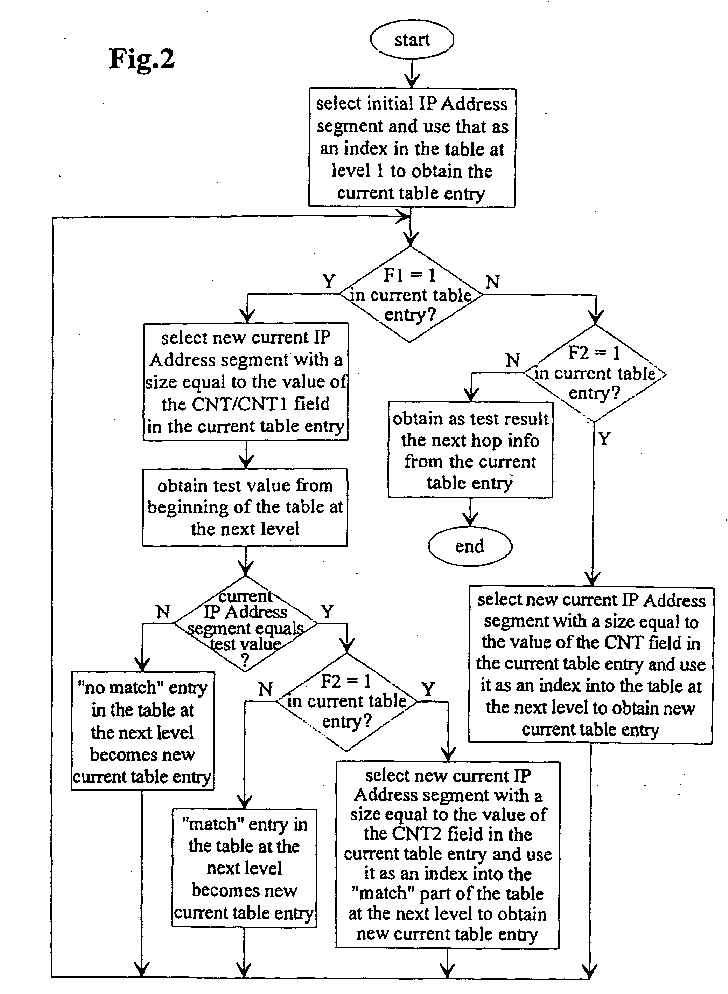

A basic embodiment of a search (lookup) data structure according to the invention is schematically shown in Fig.1; the description is supported by the flow diagram of Fig.2. Selected node tables (only those which are used in the example) are shown on different levels, together with the respectively marked IP address (= search argument).

In the first example, the following four different (kinds of) entries occur in the node tables:
-- *Basic Entries:*
   1) F1 + F2 / CNT1 / CNT2 / PTR
   2) F1 + F2/CNT / PTR
-- *Additonal Entries:*
   3) F1 + F2 / END
      = Output indicator (NHP) OR Stop indicator (NIL)
   4) TV
      = Test value (TV) only

In the basic entries, F1 + F2 indicate the operation to be performed (comparison to a test value / single indexed accessing of a table entry / combination of both); CNT or CNT1 and CNT2 are selection information indicating the number of bits to be taken from the search argument (as test argument or index) for the requested operation(s); and PTR is a table base pointer indicating the start address of a node table in which the test value is contained or in which the next entry (entries) are to be accessed.

An additional entry contains: Either flags F1 and F2 (indicating a last entry), with an output indicator (next hop pointer NHP), or with a stop indicator (NIL) indicating that the search is finished (no output route available); or it contains just a single test value (TV).

Flag combinations used in this and the other examples have the following meaning:

| **F1** | **F2** | |
|---|---|---|
| 0 | 0 | Last entry (ouput indicator or stop indicator) |
| 1 | 0 | Test to be made (one CNT field) |
| 0 | 1 | Index to be used for entry selection (one CNT field) |
| 1 | 1 | Test followed by Index operation (two CNT fields: CNT1, CNT2) |

The set of prefixes and associated next hop information used for this (and also the other two examples) is the following:

| **Prefix** | **Bit vector** | **Next hop pointer** |
|---|---|---|
| A 4.22.17/24 | 0000 0100 0001 0110 0001 0001 | 1 |
| B 4.22.17.0/26 | 0000 0100 0001 0110 0001 0001 00 | 2 |
| C 4.22.17.64/26 | 0000 0100 0001 0110 0001 0001 01 | 3 |
| D 4.22.17.243/32 | 0000 0100 0001 0110 0001 0001 1111 0011 | 4 |

The basic method described in this example is characterized by:
- the test value is stored at the beginning of a node table at the next level
- each test has a binary result: a "match" or a "no match"
- no reuse flag; each portion of the IP address is used at most only once
The procedure in the basic embodiment is as follows:

### Step 1:

The first 16 bits of the IP address (search argument) are selected as an initial segment and used as index into a table at level 1 consisting of 2¹⁶ = 65'536 entries. The entry at index 1046 is selected when the IP address starts with (i.e., has a prefix equal to) 4.22/16.

### Step 2:

This entry at index 1046 has flag combination "11" which means that first a test and then - conditionally - an index addressing operation must be made. Based on the selected entry, a segment consisting of 8 successive bits (= CNT1) within the IP address is selected and tested against a test value 17. This test value is found in the first (lowest) entry of the node table at the next level 2, which is identified by the table base pointer in entry 1046. If the test results in "no match" then the "no match" entry is selected in the table at level 2 which is a last entry containing a stop indicator "-" meaning that no result (output) is specified for the given prefix.
If the test results in a "match" then a segment consisting of 2 successive bits (= CNT 2) within the IP address is selected and used as an index into the "match" part of the selected table at level 2. This part starts above the two "fixed" entries for the test value and for the no-match result, and it comprises 4 entries to be accessed using an offset value which is derived from the index. (In the figure, the index values 0...3 are shown; they would result in offset values 2...5, meaning entries 2...5 in the respective node table of which the entry 0 containing the test value is identified by the table base pointer).
- An IP address with prefix B (index bits 00) will result in the selection of the entry with index 0 which is a last entry (flags = 00) containing next hop pointer "2".
- An IP address with prefix C (index bits 01) will result in the selection of the entry with index 1 which is also a last entry (flags = 00), containing next hop pointer "3".
- An IP address with the first 26 bits equal to those of prefix D (presently used index bits 11) will result in the selection of the entry with index 3 which requires an additional test (flags = 10) which is described below as step 3.
- All other IP addresses which had a "match" result in the previous test (these are the remaining matching addresses, having index bits 10) have prefix A and will result in the selection of the entry with index 2 in the match part of the node table at level 2, which is a last entry (flags = 00) containing next hop pointer "1".

### Step 3:

5 Based on the entry at index 3 in the match part of the table at level 2, a segment consisting of 6 successive bits (CNT = 6) within the IP address is selected and tested against a test value 51 (which is found in the lowest entry of the table at level 3, which is identified by the table base pointer found in the respective entry of the last used node table at level 2).
-- For an IP address with prefix D (having a bit sequence 110011 = 51 in the respective address positions) the test results in a "match" leading to the "match" entry in the selected node table at level 3, wich is a last entry (flags = 00) containing next hop pointer "4".
-- For IP addresses which do not have a prefix D, the test against value 51 results in a "no match" condition, thus selecting the "no match" entry in the selected node table at level 3, which is also a last entry (flags = 00), containing next hop pointer "I". These addresses have a prefix A (all remaining addresses with prefix A, i.e. other than those which would have been handled already in step 2).

The flow diagram of Fig.2 illustrates how the entries are handled in response to the flags (bit pair in the first positions) contained in each basic entry. This scheme corresponds to the above description.

### Second Embodiment Example

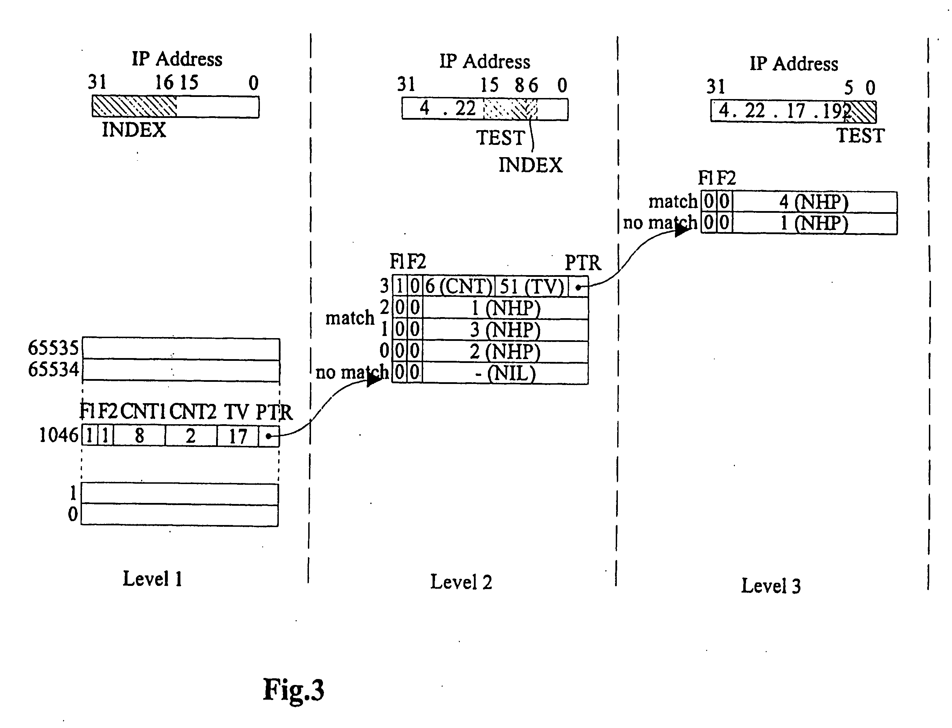

A second embodiment example is shown in Fig.3. This is very similar to the first example, with the difference that the test values to be used are not kept in separate entries (of a node table at the next level) but are rather directly contained in the respective entry requiring the test to be made. Therefore, the node table entries must have an additional field which is shown in the modified set below:
-- *Basic Entries:*
   1) F1 + F2 CNT1/ CNT2 / TV / PTR
   2) F1 + F2 / CNT / TV /PTR
-- *Additonal Entries:*
   3) F1 + F2 / END
      = Output indicator (NHP) --or-- Stop indicator (NIL)

It is clear that this modification is useful when the test values are usually short (a few bits only) whereas the solution of the first example is better suited when the search data base will contain many long test values. This second solution saves the storage space for the separate test value entries, and further avoids the additional access operations for fetching the test values.

It appears that on the basis of Fig.3 and with the description given for the first example, no further detailed description is necessary here for the second example.

### Third Embodiment Example

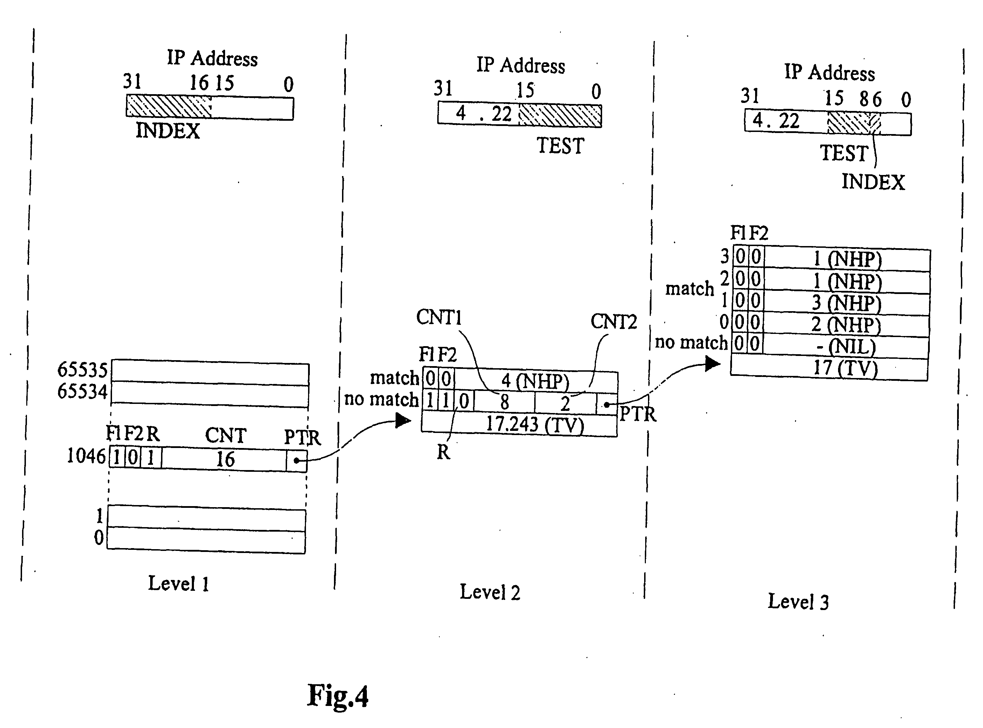

A furher, third embodiment example is shown in Fig.4. This is also somewhat similar to the first example. The same set of prefixes A...D is also used here. However, in contrast to the first (and second) example, the present example provides for the reuse of portions (bit groups) of the search argument (IP address) which were already evaluated in a previous step. In the first (and second) example, always subsequent (new) groups of bits from the search argument are used for test operations or as indexes in accessing node table entries.

The reuse of a selected portion (bit group) from an IP address (search argument) may be useful in the following situation: When a set of prefixes occurring in an application contains one or a few very specific (long) prefixes, one could first make a test of a long segment of this specific prefix against a respective test value to get an immediate result if a match is detected. Otherwise (if the result is "no match" indicating that this specific prefix is not present), a portion of the already used long prefix segment is then used in another operation to distinguish other, more similar prefixes from each other in several subsequent operations.
This may result in faster search (IP address evaluation) operation in systems where such specific, isolated prefixes occur.

The set of node table entries to be used for this example is similar to that of example 1, except that that the basic entries contain an additional "Reuse" flag.
-- *Basic Entries:*
   1) F1 + F2 / R / CNT1 / CNT2 / PTR
   2)F1+F2/R/CNT/PTR
-- *Additional Entries:*
   3) F1 + F2 / END = Output indicator (NHP) --or-- Stop indicator (NIL)
   4) TV
      = Test value (TV) only

The procedure in this third example according to Fig.4 is as follows (the set of prefixes A...D is the same as in the first example, but the stored data structure in the node tables is of course different):

The R (Reuse) flag in a basic entry is set when a certain segment of an IP address is used for the first time and has to be reused again (under certain conditions depending on a test result).

### Step 1: (same as in the basic method of example 1)

The first 16 bits of the IP address are selected as an initial segment and used as an index into a table at level 1 consisting of 2¹⁶ = 65'536 addresses. The entry at index 1046 is selected when the IP address starts with (i.e. has a prefix equal to) 4.22/16.

### - Step 2:

Based on the selected entry at index 1046 in the table at level 1, a segment consisting of 16 successive bits (CNT) within the IP address is selected and tested against a test value 17.243 (bit sequence 0001 0001 1111 0011). The reuse flag (R) is set which means that at least a portion of the selected segment may be used again. The test value is found in the lowest position of a node table at level 2, which is identified by the table base pointer in the entry 1046.

If the test results in a "match", then the "match" entry is accessed in the selected node table at level 2. This is a last entry (flags = 00) containing the next hop pointer "4". This is the case for IP addresses with prefix D.

If the test results in "no match", then the "no match" entry is accessed in the selected node table at level 2. This entry specifies a combined test/index operation (flags = 11) which is described in step 3 below, and is selected for all IP addresses that start with 4.22 (bit sequence 0000 0100 0001 0110) but do not have the prefix D.

### Step 3:

Based on the "no match" entry in the node table at level 2 (specifying first a test operation based on CNT1 = 8), a new segment of 8 successive bits is selected from the segment of 16 bits out of the IP address, which was used in the previous operation. This reuse was determined by the R flag set to 1 in the entry 1046 at level 1. The reuse Flag R in the "no match" entry of level 2 is set to 0 since the now selected segment of 8 bits will not be reused again.

If the test results in "no match" then the "no match" entry is selected in a node table at level 3 specified by the table base pointer in the last accessed entry. The newly selected entry is a last entry (flags = 00) containing a stop indicator "-" (meaning that no output route is specified for IP addresses having a prefix other than 4.22.17 and that the search is finished).

If the test results in a "match", then the indexing operation specified in the"no match" entry of the table at level 2 is effected, using CNT2 = 2. Thus, a segment of 2 successive bits (following the 8 address bits selected in the previous step for the test operation) is selected from the IP address and used as an index for accessing an entry in the "match" part of the selected node table at level 3. This part has four entries of which one is identified by an offset value deducted from the recently selected two index bits.
-- An IP address with prefix B (index bits 00) will result in the selection of the entry in the "match" part of the table at level 3, associated with index 0. This is a last entry containing next hop pointer "2".
-- An IP address with prefix C (index bits 01) will result in the selection of the entry in the "match" part of the table at level 3, which is associated with index 1. This is also a last entry, containing next hop pointer "3".
-- IP addresses that do not have a prefix B, C, or D (but start with the sequence 4.22.17) must have index bits 10 or 11 at this stage and thus will result in the selection of one of the two remaining entries in the "match" section of the table at level 3, i.e. those associated with index 2 or 3. They both contain next hop pointer "1" which corresponds to prefix A.

Conclusion: When comparing the basic solution of example 1 with the variation of example 3, one can see that they both lead to the same result: IP addresses with prefixes A, B, C, or D will be correctly directed to output routes corresponding to next hop pointer 1, 2, 3, or 4, respectively. All other IP addresses result in a termination of the search. - However, the basic solution (example 1) may be more advantageous in situations where addresses with prefixes B and C occur more frequently because lookups are faster for these prefixes. In contrast, the variation of example 3 is more effective in situations where addresses with prefix D occur more frequently because of the shorter lookup time for this prefix D.

Remark on entry selection: As was mentioned in the beginning, and was shown in the three examples, the selection of an entry in a node table that was identified by a table base pointer, can be effected in different ways:
When a test was made (against a stored test value), there is a binary result, "match" or "no-match". Then there are two possibilities:
a) Each of the two results causes the selection of one specific entry in the node table, always associated with that result (c.f. Fig.4, transition from level 1 to level 2).
b) One of the two results ("no match") causes the selection of one specific entry in the node table, always associated with that result. The other of the two results ("match") causes the additional selection of an index value which in turn is then used to select one of two (or four, or eight) entries in a special portion ("match") of the respective node table (cf. transition from level 2 to level 3 in Fig.4).
Of course, direct addressing of an entry (in a table not containing entries fixedly associated to the result of a test operation) is also possible using an index value. This is the case e.g. in the initial step on level 1 of Fig. 1 and Fig.4.
These different entry selection possiblities allow a very flexible adaptation of the search procedure and the search data base to the expected distribution of prefixes.

### Generation of Optimized Data Structure for Prefix Lookup

In the three exmples described above, the different data structure elements and also basic and combined operations, which are provided by the invented lookup procedure for longest matching prefixes, were presented and explained. As was mentioned, they allow an optimization of the lookup process with respect to operation speed or storage and processor requirements. The search data base must be so structured and the node table entries so arranged that they best fit the expected distribution of occurring prefixes.

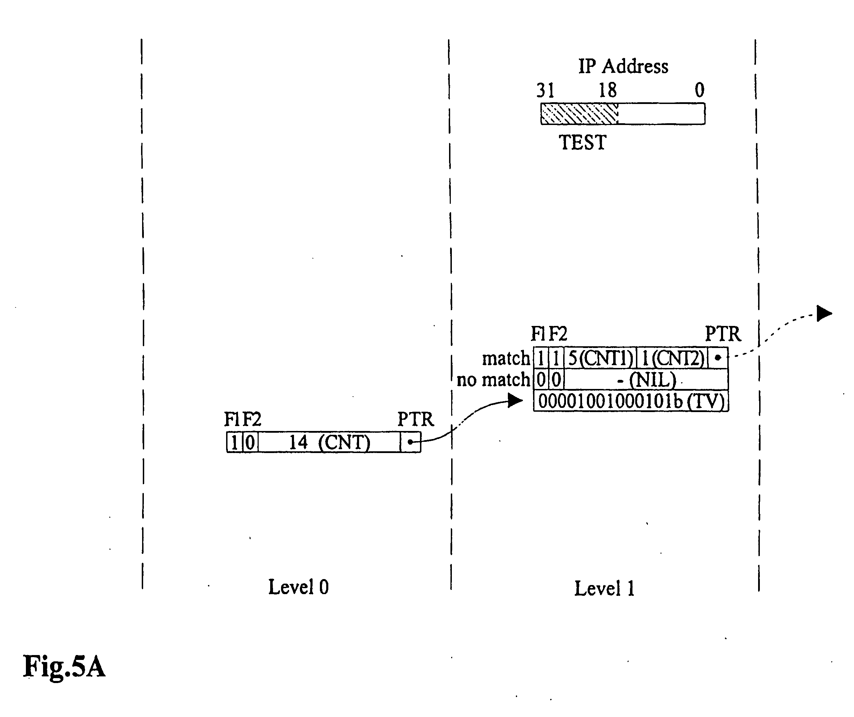

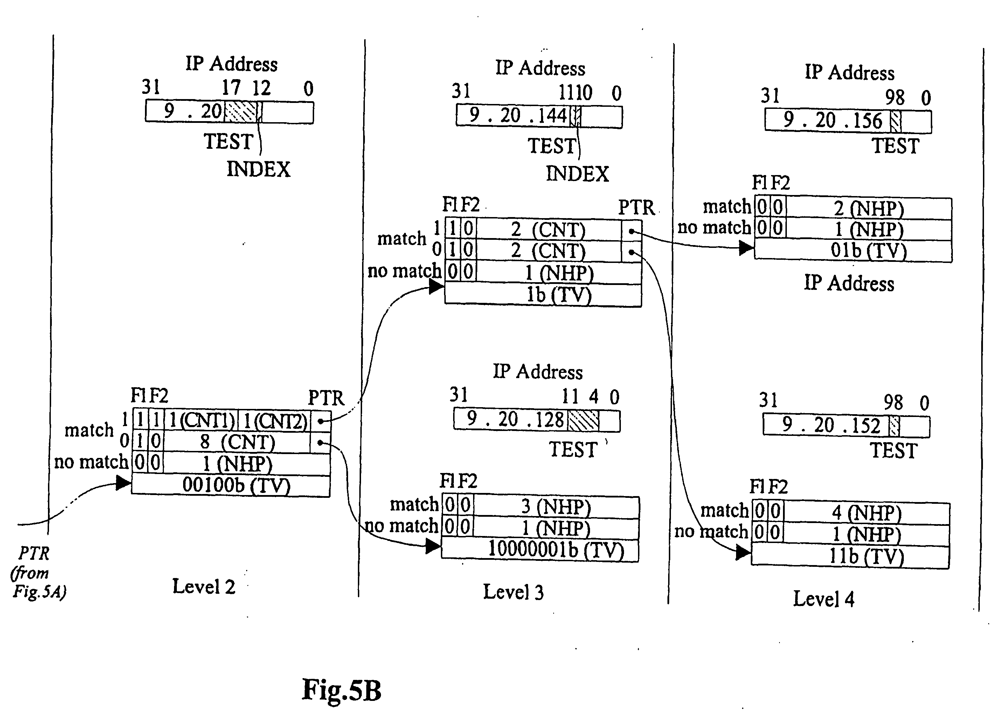

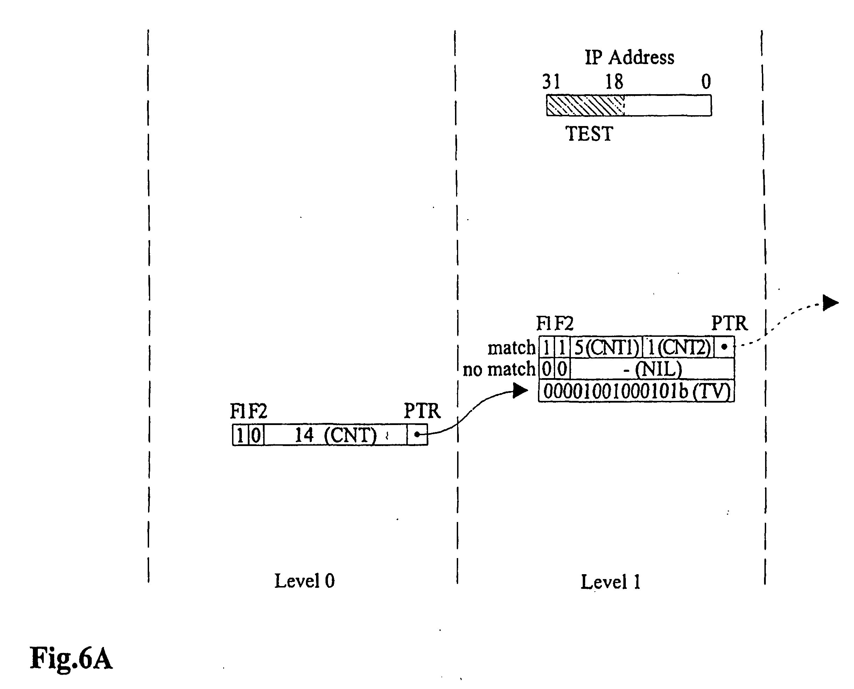

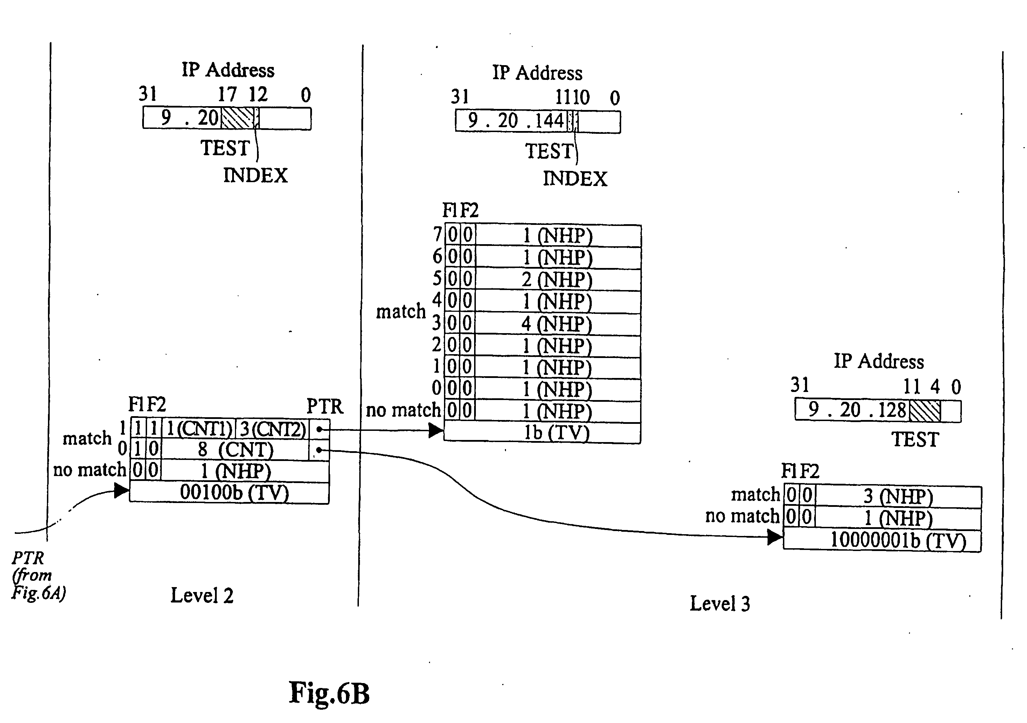

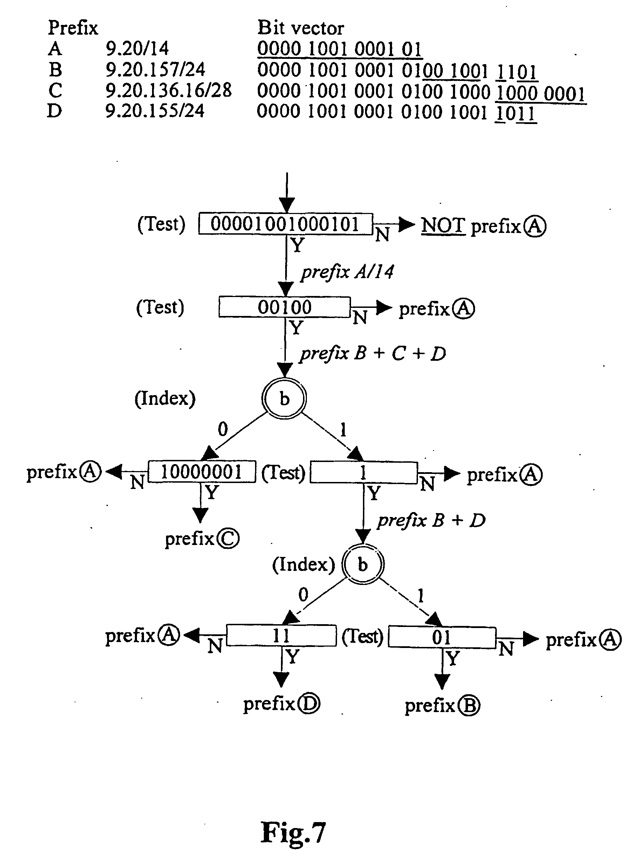

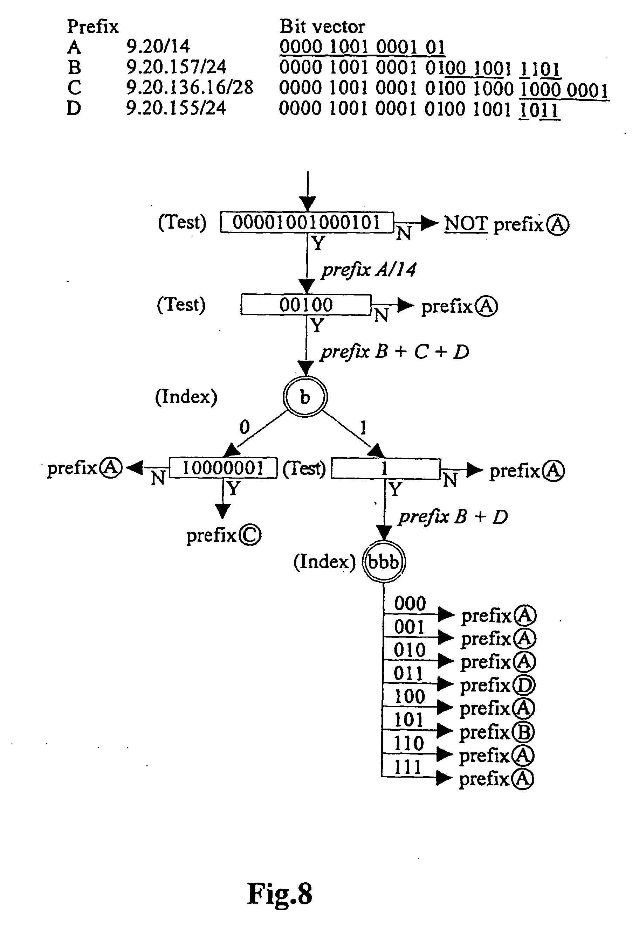

An example for such optimization is illustrated in Fig.5 (5A and 5B) and Fig.6 (6A and 6B) and also in Fig.7 and Fig.8 and explained in the following.

The type of entries used and the designation of fields are the same as those in the first example presented in the beginning of this detailed description.

The set of prefixes assumed for present optimization example is shown below.
This is of course a reduced set of different prefixes which is much smaller than those really occurring. But it should be sufficient for illustrating the principle.

| **Prefix** | **Bit vector** | **Next hop pointer** |
|---|---|---|
| A 9.20/14 | 0000 1001 0001 01 | 1 |
| B 9.20.157/24 | 0000 1001 0001 0100 1001 1101 | 2 |
| C 9.20.136.16/28 | 0000 1001 0001 0100 1000 1000 0001 | 3 |
| D 9.20.155/24 | 0000 1001 0001 0100 1001 1011 | 4 |

Fig.5 shows, for this set of prefixes, a first data structure of the multiple-level node table arrangement. This data structure is created in the following way: If prefixes share a common most significant part (leading prefix), then this part is selected and stored as a test value for a first test operation. Then, the next bit, i.e. the first bit that is different, is determined to be used as index to select between two separate search paths. In the same way, along a given search path, the common most significant part of the remaining portion of the prefixes in that search path is selected and stored as a test value for test operations. Then, the next bit, i.e. again the first bit that is different in the remaining portion of the prefixes on this search path, is determined to be used as an index to select between two succeeding paths, and so on. For a prefix that is a portion of another, longer prefix (and thus does not have a different bit but is only shorter), no index is used but the test value covers the bits up to the end of the shorter prefix that is a portion of the other prefix.

The selection of test values and indexes during this process and the resulting branching scheme are illustrated in Fig.7. In this figure, a rectangular box indicates a test operation between an address segment and the bit sequence (test value) shown in the box. These test values will be stored in the respective node table entries. A double circle indicates an indexing operation, the number of "b"s representing the number of successive bits of the address used for indexing, and their actual values being shown on the outgoing lines. When the output of a test or index operation reaches an entry with an output indicator (next hop pointer) for a prefix, this is indicated by the encircled prefix letter at that output.

Details of procedure: Prefix A is common to the prefixes B, C, and D. The data structure (Fig.5) therefore starts with a test operation covering up to the end of prefix A ('0000 1001 0001 01b') The remaining portions of prefixes B, C, and D share the common part '00 100b'. This becomes the test value stored in the table at level 2. In case of a negative test result, the prefix A was the longest matching prefix for respective search arguments, and the corresponding next hop pointer "1" is stored in the "no match" entry in the table at level 2.

Thereafter, a one bit index is used to select between two separate paths. Only prefix C will 'go' along the search path with an index value '0'. The remaining bits of prefix C are included as a test value in the lower table at level 3. A positive test result means that prefix C is the longets matching prefix and therefore the next hop pointer "3" corresponding to prefix C is stored in the "match" entry. A negative test result means that prefix A is the longest matching prefix for all respective search arguments and therefore the next hop pointer "1" corresponding to a prefix A is stored in the "no match" entry. The same approach is used along the other search path for prefixes B and D.

The data structure shown in Fig.5 (5A and 5B) which was generated according to the above rules, can be further optimized to improve the lookup speed for certain prefixes by increasing the sizes of the indexes that are used along the search path for those specific prefixes and adapting the remaining parts of the succeeding search paths (for example by removing bits that now have become part of an index, from a test value in the succeeding test operation). Fig.6 (6A and 6B) shows an optimized data structure in which the lookup speed is incrased for the prefixes B and D by increasing the size (bit number) of the index from 1 to 3 (CNT2 field in the "match" entry at index "1" within the table at level 2 of Fig.6B is given a value of 3).

Fig.8 shows the selection of test values and indexes during generation of an optimized search data structure as shown in Fig.6, and the resulting branching scheme. A comparison between Fig.7 and Fig.8 shows how at any particular place of the searching tree, the design can be changed for increasing the search speed by reducing the number of required operations in exchange for an increased number of entries in the table storage, or vice versa.

## Claims

1. Method for determining an output in response to a given input search argument, based on longest matching prefix selection and using lookup operations in a multiple-level arrangement of node tables;
wherein, in successive steps, table entries in node tables of successive levels are interrogated until an end indication is found; in which method
starting with a selected segment of the search argument having individually determinable length which is used as index for accessing a first entry in a first level of the node tables, depending on the table entry which comprises an operation indication (F1, F2) and until a last entry is found the next search at the next level is performed by one of the following:
(a) a test using a selection information (CNT) to selected a further segment;
(b) an index using the selection information (CNT) to define the selected segment that constitutes the index;
(c) the test followed by the index using the selection information (CNT1, CNT2).

2. Method as in claim 1, wherein the selection and accessing of a node table entry is effected by
- a table base pointer (PTR) identifying a node table containing an entry to be subsequently accessed, and
- an offset value.

3. Method as in claim 2, wherein the offset value is determined:
- EITHER by a segment (index) of the search argument, said segment being selected in response to selection information (CNT) contained in the respective entry;
- OR by the binary test result of a comparison between a stored test value (TV) and a selected segment (test argument) of the search argument.

4. Method as in claim 2, wherein the offset value is determined in response to the binary test result of a comparison between a test value stored in a node table entry and a selected segment of the search argument, and that
a) if the test result has a first binary value (e.g. 0), the offset value is a given value selecting a predetermined entry in the node table selected by the table base pointer (PTR), and
b) if the test result has a second binary value (e.g. 1), then another segment of the search argument is selected in response to second selection information (CNT2) contained in the respective entry and is used as index to derive an offset value for accessing an entry in the node table selected by the table base pointer (PTR).

5. Method as in claim 2, wherein the offset value is determined in response to the binary test result of a comparison between a test value stored in a node table entry and a selected segment of the search argument, and that
a) if the test result has a first binary value (e.g. 0), the offset value is a first given value selecting a first predetermined entry in the node table selected by the table base pointer (PTR), and
b) if the test result has a second binary value (e.g. 1), the offset value is a second given value selecting a second predetermined entry in the node table selected by the table base pointer (PTR).

6. Method as in claim 1, comprising the following steps:
- selecting a node table entry;
- extracting a test value (TV) from said table entry or from a predetermined entry in another node table, if the application of a test value is indicated;
- selecting a segment from the search argument as test argument in response to selection information (CNT; CNT1) associated with the test value and containd in the selected table entry;
- comparing the test value to said selected test argument segment of the search argument; and
- using the test result for determining the next step in the search procedure.

7. Method as in claim 6, wherein
- a table base pointer (PTR) is extracted from the selected node table entry, for selecting another node table; and
- said test value (TV) is extracted from a predetermined entry of the selected other node table.

8. Method as in claim 6, wherein
- a table base pointer (PTR) is extracted from the selected node table entry, for selecting another node table; and
- said test value (TV) is also extracted from the same selected node table entry.

9. Method as in claim 6, wherein a table base pointer (PTR) is extracted from the selected node table entry, for selecting another node table; and wherein following further substeps are executed in response to the binary test result:
- EITHER a second selection information (CNT2) is obtained from the respective entry and used to extract another segment of the search argument, which in turn is then used as index for determining an offset value for accessing an entry in the selected other node table;
- OR a predetermined location in the other node table is accessed.

10. Method as in claim 6, wherein a table base pointer (PTR) is extracted from the selected node table entry, for selecting another node table; and
- depending on the binary test result, one or the other of two predetermined entries in the other node table is accessed.

11. Method as in claim 6, wherein, when a reuse indication (R) is contained in the respective entry, and when a predetermined one of two possible test results was obtained:
- another selection information (CNT2) is used to obtain another selected segment from the search argument which, is at least partially identical to all or a portion of the previously selected test argument segment of the search argument, and
- said other selected segment is then used as EITHER an index value for accessing another node table entry, OR as a test argument to be compared to another test value.

12. Method as in claim 11, wherein
- said other selected segment is a portion of the previously used test argument segment.

13. Method as in claim 11, wherein
- said other selected segment is equal to or includes the previously used test argument segment.

14. Stored data structure comprising node tables each having plural entries, in a system for determining an output in response to a given input search argument, based on longest matching prefix selection and using lookup operations in a multiple-level arrangement of node tables;
- in which each node table entry is either accessed in response to a selected segment of the search argument, which is used as a table index, or is accessed directly in response to the result of a comparing test operation;
said node table entries including basic entries, each holding at least
- an operation indication (F1, F2) that allows the selection of at least one of the following: a test, an index, a test followed by an index, a last entry;
- a selection information (CNT; CNT 1, CNT2) for selecting a segment of the search argument to be used as the table index and/or the test operation when the operation indication (F1, F2) does not correspond to the last entry; and
- a table base pointer (PTR) identifying the next node table to be used.

15. Stored data structure as in claim 14, further comprising:
- a test value (TV) to be compared to a selected segment of the search argument; or
- an end indication (END) which is either an output indicator (NHP) or a stop indicator (NIL).

16. Stored data structure as in claim 14, wherein a basic entry may additionally include:
- second selection information (CNT2) for extracting a further segment from the search argument during processing of the same entry.

17. Stored data structure as in claim 14, wherein at least some of the basic entries in a node table contain:
- two items of selection information (CNT1, CNT2) each for selecting a segment of the given search argument, one of said selected segments constituting an index value for accessing an entry in a node table designated by a table base pointer (PTR), and the other one of said selected segments constituting a test argument to be compared to a stored test value (TV).

18. Stored data structure as in claim 14, wherein at least one of the node tables contains:
a) a section with predetermined entries to be directly accessed in response to a test result, and
b) another section containing entries to be acccessed in response to an offset value derived from an index value which is a selected segment of the search argument.

19. Stored data structure as in claim 14, wherein
- at least one of the basic entries contains additionally a test value (TV) to be compared to a selected segment of the search argument.

20. Stored data structure as in claim 14, wherein
- at least one of the basic entries contains, besides a table base pointer (PTR) for the next node table to be used, an indication that a test value (TV) is to be used which is contained in a predetermined location of the next node table identified by said table base pointer.

21. Stored data structure as in claim 14, wherein
- a basic entry includes a reuse flag (R) indicating that, after initial selection of a first segment from the search argument as test argument, another segment is to be selected from the search argument which is at least partially identical to all or a portion of the previously selected search argument segment.

## Patentansprüche

1. Verfahren zum Ermitteln einer Ausgangsleitung als Reaktion auf ein bestimmtes eingehendes Suchargument anhand der Auswahl des längsten passenden Präfix und mit Hilfe von Suchoperationen in einer Mehrebenenanordnung von Knotentabellen;
bei welchem Tabelleneinträge in Knotentabellen aufeinander folgender Ebenen in aufeinander folgenden Schritten so lange abgefragt werden, bis eine Abschlusskennung gefunden wird; wobei das Verfahren mit einem ausgewählten Abschnitt des Sucharguments beginnt, welches eine einzeln zu ermittelnde Länge aufweist, die als Index für das Zugreifen auf einen ersten Tabelleneintrag in einer ersten Ebene der Knotentabellen dient, und in Abhängigkeit von dem eine Arbeitskennung (F1, F2) umfassenden Tabelleneintrag so lange sucht, bis ein letzter Tabelleneintrag gefunden wird, und dann die Suche mittels eines der folgenden Schritte auf der nächsten Ebene fortsetzt:
(a) Durchführen einer Prüfung anhand einer Auswahlinformation (CNT), um einen weiteren Abschnitt auszuwählen;
(b) Definieren des ausgewählten Abschnitts durch einen für diesen Abschnitt charakteristischen Index mit Hilfe der Auswahlinformation (CNT);
(c) Durchführen der Prüfung und anschließend Definieren des Abschnitts durch den Index mit Hilfe der Auswahlinformation (CNT1, CNT2).

2. Verfahren nach Anspruch 1, bei welchem das Auswählen und das Zugreifen auf einen Eintrag in der Knotentabelle durch Folgendes bewirkt wird:
- einen Tabellenbasiszeiger (PTR), der auf eine Knotentabelle mit einem Eintrag zeigt, auf den anschließend zugegriffen werden soll, und
- einen Versatzwert.

3. Verfahren nach Anspruch 2, bei welchem der Versatzwert ermittelt wird:
- ENTWEDER mit Hilfe eines Abschnitts (Index) des Sucharguments, wobei dieser Abschnitt als Reaktion auf die im betreffenden Eintrag enthaltene Auswahlinformation (CNT) ausgewählt wird;
- ODER mit Hilfe des binären Prüfergebnisses eines Vergleichs zwischen einem gespeicherten Prüfwert (Test Value, TV) und einem ausgewählten Abschnitt (Prüfargument) des Sucharguments.

4. Verfahren nach Anspruch 2, bei welchem der Versatzwert als Reaktion auf das binäre Prüfergebnis eines Vergleichs zwischen einem Prüfwert, der in einem Eintrag der Knotentabelle gespeichert ist, und einem ausgewählten Abschnitt des Sucharguments ermittelt wird und,
a) wenn das Prüfergebnis gleich einem ersten Binärwert (z.B. "0") ist, der Versatzwert einen bestimmten Wert aufweist, der in der vom Tabellenbasiszeiger (PTR) ausgewählten Knotentabelle einen vorgegebenen Eintrag auswählt, und,
b) wenn das Prüfergebnis gleich einem zweiten Binärwert (z.B. "1") ist, als Reaktion auf die im betreffenden Eintrag enthaltene zweite Auswahlinformation (CNT2) ein anderer Abschnitt des Sucharguments ausgewählt und als Index zum Ermitteln eines Versatzwertes für das Zugreifen auf einen Eintrag in der Knotentabelle verwendet wird, die durch den Tabellenbasiszeiger (PTR) ausgewählt wurde.

5. Verfahren nach Anspruch 2, bei welchem der Versatzwert als Reaktion auf das binäre Prüfergebnis eines Vergleichs zwischen einem Prüfwert, der in einem Eintrag der Knotentabelle gespeichert ist, und einem ausgewählten Abschnitt des Sucharguments ermittelt wird und,
a) wenn das Prüfergebnis gleich einem ersten Binärwert (z.B. "0") ist, der Versatzwert einen bestimmten ersten Wert aufweist, der in der vom Tabellenbasiszeiger (PTR) ausgewählten Knotentabelle einen vorgegebenen ersten Eintrag auswählt, und,
b) wenn das Prüfergebnis gleich einem zweiten Binärwert (z.B. "1") ist, der Versatzwert einen bestimmten zweiten Wert aufweist, der in der vom Tabellenbasiszeiger (PTR) ausgewählten Knotentabelle einen vorgegebenen zweiten Eintrag auswählt.

6. Verfahren nach Anspruch 1, welches die folgenden Schritte umfasst:
- Auswählen eines Eintrags in einer Knotentabelle;
- Entnehmen eines Prüfwertes (TV) aus dem Eintrag der Knotentabelle oder aus einem vorgegebenen Eintrag in einer Knotentabelle, wenn die Anwendung eines Prüfwertes angezeigt wird;
- Auswählen eines Abschnitts als Prüfargument aus dem Suchargument als Reaktion auf die zum Prüfwert gehörende Auswahlinformation (CNT; CNT1), die im Eintrag der ausgewählten Knotentabelle enthalten ist;
- Vergleichen des Prüfwertes mit dem aus dem Suchargument ausgewählten Abschnitt des Prüfarguments; und
- Verwenden des Prüfergebnisses zum Ermitteln des nächsten Schrittes in der Suchprozedur.

7. Verfahren nach Anspruch 6, bei welchem
- ein Tabellenbasiszeiger (PTR) dem Eintrag der ausgewählten Knotentabelle entnommen wird, um eine andere Knotentabelle auszuwählen; und
- der Prüfwert (TV) einem vorgegebenen Eintrag der anderen ausgewählten Knotentabelle entnommen wird.

8. Verfahren nach Anspruch 6, bei welchem
- ein Tabellenbasiszeiger (PTR) dem Eintrag der ausgewählten Knotentabelle entnommen wird, um eine andere Knotentabelle auszuwählen; und
- der Prüfwert (TV) ebenfalls demselben Eintrag der ausgewählten Knotentabelle entnommen wird.

9. Verfahren nach Anspruch 6, bei welchem der Tabellenbasiszeiger (PTR) dem Eintrag der ausgewählten Knotentabelle entnommen wird, um eine andere Knotentabelle auszuwählen; und bei welchem als Reaktion auf das binäre Prüfergebnis die weiteren folgenden Teilschritte ausgeführt werden:
- ENTWEDER Ermitteln einer zweiten Auswahlinformation (CNT2) aus dem betreffenden Eintrag und Verwenden dieser Information zum Entnehmen eines anderen Abschnittes aus dem Suchargument, wobei dieser Abschnitt wiederum als Index zum Ermitteln eines Versatzwertes für das Zugreifen auf einen Eintrag in der anderen ausgewählten Knotentabelle verwendet wird;
- ODER Zugreifen auf einen vorgegebenen Speicherplatz in der anderen Knotentabelle.

10. Verfahren nach Anspruch 6, bei welchem dem Eintrag der ausgewählten Knotentabelle ein Tabellenbasiszeiger (PTR) entnommen wird, um eine andere Knotentabelle auszuwählen; und
- in Abhängigkeit vom binären Prüfergebnis auf einen von zwei vorgegebenen Einträgen in der anderen Knotentabelle zugegriffen wird.

11. Verfahren nach Anspruch 6, bei welchem, wenn im betreffenden Eintrag eine Wiederholungskennung (Reuse, R) enthalten ist und eines von zwei möglichen Prüfergebnissen erhalten wurde:
- eine andere Auswahlinformation (CNT2) zum Ermitteln eines anderen ausgewählten Abschnitts aus dem Suchargument verwendet wird, wobei dieser Abschnitt zumindest teilweise oder ganz mit einem Teil des zuvor als Prüfargument aus dem Suchargument ausgewählten Abschnitts identisch ist, und
- der andere ausgewählte Abschnitt dann ENTWEDER als Indexwert für das Zugreifen auf einen anderen Eintrag in der Knotentabelle ODER als Prüfargument verwendet wird, das mit einem anderen Prüfwert verglichen werden soll.

12. Verfahren nach Anspruch 11, bei welchem
- der andere ausgewählte Abschnitt Teil des zuvor verwendeten Abschnitts des Prüfarguments ist.

13. Verfahren nach Anspruch 11, bei welchem
- der andere ausgewählte Abschnitt gleich dem zuvor verwendeten Abschnitt des Prüfarguments ist oder dieses einschließt.

14. Gespeicherte Datenstruktur, welche Knotentabellen mit jeweils einer Vielzahl von Einträgen umfasst, in einem System zum Ermitteln einer Ausgangsleitung als Reaktion auf ein bestimmtes eingehendes Suchargument anhand der Auswahl des längsten passenden Präfix und mit Hilfe von Suchoperationen in einer Mehrebenenanordnung von Knotentabellen;
- in welcher auf jeden Eintrag der Knotentabelle entweder als Reaktion auf einen ausgewählten Abschnitt des Sucharguments, der als Tabellenindex dient, oder als Reaktion auf das Ergebnis einer Vergleichsprüfung direkt zugegriffen wird;
wobei die Einträge der Knotentabelle Basiseinträge enthalten, in denen jeweils zumindest Folgendes enthalten ist:
- eine Arbeitskennung (F1, F2), mit deren Hilfe mindestens Folgendes ausgewählt werden kann: eine Prüfung, ein Index, eine Prüfung mit nachfolgender Definition eines Index, ein letzter Eintrag;
- eine Auswahlinformation (CNT; CNT1, CNT2) zum Auswählen eines Abschnitts des Sucharguments zur Verwendung als Tabellenindex und/oder für den Prüfschritt, wenn die Arbeitskennung (F1, F2) nicht dem letzten Eintrag entspricht; und
- einen Tabellenbasiszeiger (PTR), der die nächste zu verwendende Knotentabelle anzeigt.

15. Gespeicherte Datenstruktur nach Anspruch 14, welche ferner Folgendes umfasst:
- einen Prüfwert (TV), der mit einem ausgewählten Abschnitt des Sucharguments verglichen werden soll; oder
- eine Abschlusskennung (END), die entweder eine Ausgangsleitungskennung (NHP) oder eine Stoppkennung (NIL) ist.

16. Gespeicherte Datenstruktur nach Anspruch 14, bei welcher ein Basiseintrag zusätzlich noch Folgendes beinhalten kann:
- eine zweite Auswahlinformation (CNT2) zum Entnehmen eines weiteren Abschnitts aus dem Suchargument während der Verarbeitung desselben Eintrags.

17. Gespeicherte Datenstruktur nach Anspruch 14, bei welcher mindestens einige der Basiseinträge in einer Knotentabelle Folgendes enthalten:
- zwei unterschiedliche Auswahlinformationen (CNT1, CNT2) zum Auswählen jeweils eines Abschnitts aus dem betreffenden Suchargument, wobei einer der ausgewählten Abschnitte einen Indexwert für das Zugreifen auf einen Eintrag in einer Knotentabelle, die durch einen Tabellenbasiszeiger (PTR) ausgewählt wurde, und der andere der ausgewählten Abschnitte ein Prüfargument darstellt, das mit einem gespeicherten Prüfwert (TV) verglichen werden soll.

18. Gespeicherte Datenstruktur nach Anspruch 14, bei welcher mindestens eine der Knotentabellen Folgendes enthält:
a) einen Bereich mit vorgegebenen Einträgen, auf die als Reaktion auf ein Prüfergebnis direkt zugegriffen wird, und
b) einen anderen Bereich mit Einträgen, auf die als Reaktion auf einen Versatzwert zugegriffen wird, der von einem Indexwert abgeleitet wurde, welcher ein ausgewählter Abschnitt des Sucharguments ist.

19. Gespeicherte Datenstruktur nach Anspruch 14, bei welcher
- mindestens einer der Basiseinträge zusätzlich einen Prüfwert (TV) enthält, der mit einem ausgewählten Abschnitt des Sucharguments verglichen werden soll.

20. Gespeicherte Datenstruktur nach Anspruch 14, bei welcher
- mindestens einer der Basiseinträge außer einem Tabellenbasiszeiger (PTR) für die nächste zu verwendende Knotentabelle noch eine Kennung enthält, dass ein Prüfwert (TV) verwendet werden soll, der in einem vorgegebenen Speicherplatz in der durch den Tabellenbasiszeiger bestimmten nächsten Knotentabelle enthalten ist.

21. Gespeicherte Datenstruktur nach Anspruch 14, bei welcher
- ein Basiseintrag eine Wiederholungsmarkierung (R) beinhaltet, welche anzeigt, dass nach der ersten Auswahl eines ersten Abschnitts als Prüfargument ein anderer Abschnitt aus dem Suchargument ausgewählt wird, der zumindest teilweise mit dem gesamten zuvor ausgewählten Abschnitt des Sucharguments oder einem Teil davon identisch ist.

## Revendications

1. Procédé de détermination d'une sortie en réponse à un argument de recherche en entrée, donné, basé sur une sélection des préfixes de correspondance les plus longs, et en utilisant des opérations de consultation dans un agencement à niveaux multiples de tables nodales ;
dans lequel, en étapes successives, des entrées de table dans les tables nodales de niveaux successifs sont interrogées jusqu'à trouver une indication finale ; procédé dans lequel,
en commençant par un segment sélectionné de l'argument de recherche ayant une longueur déterminable individuellement, utilisé comme index pour l'accès à une première entrée d'un premier niveau des tables nodales, selon l'entrée de table qui comprend une indication d'opération (F1, F2) et jusqu'à ce qu'une dernière entrée soit trouvée, la recherche suivante au niveau suivant est accomplie par l'un des choix suivants :
(a) un test, utilisant une information de sélection (CNT) pour sélectionner un autre segment ;
(b) un index, utilisant l'information de sélection (CNT) pour définir le segment sélectionné constituant l'index ;
(c) le test suivi par l'index utilisant l'information de sélection (CNT1, CNT2).

2. Procédé selon la revendication 1, dans lequel la sélection et l'accès d'une entrée de table nodale sont effectués par :
- un pointeur de base de table (PTR), identifiant une table nodale contenant une entrée devant faire l'objet d'un accès subséquent, et
- une valeur de décalage.

3. Procédé selon la revendication 2, dans lequel la valeur de décalage est déterminée :
- SOIT par un segment (index) de l'argument de recherche, ledit segment étant sélectionné en réponse à une information de sélection (CNT) contenue dans l'entrée respective ;
- SOIT par le résultat de test binaire d'une comparaison effectuée, entre une valeur de test (TV) stockée et un segment sélectionné (argument de test) de l'argument de recherche.

4. Procédé selon la revendication 2, dans lequel la valeur de décalage est déterminée en réponse au résultat de test binaire d'une comparaison effectuée, entre une valeur de test stockée dans une entrée de table nodale et un segment sélectionné de l'argument de recherche, et en ce que
a) si le résultat de test est une première valeur binaire (par exemple 0), la valeur de décalage est une valeur donnée, sélectionnant une entrée prédéterminée dans la table nodale sélectionnée par le pointeur de base de table (PTR), et
b) si le résultat de test est une deuxième valeur binaire (par exemple 1), alors un autre segment de l'argument de recherche est sélectionné, en réponse à la deuxième information de sélection (CNT2) contenue dans l'entrée respective, et est utilisé comme index pour dériver une valeur de décalage pour l'accès d'une entrée dans la table nodale, sélectionnée par le pointeur de base de table (PTR).

5. Procédé selon la revendication 2, dans lequel la valeur de décalage est déterminée en réponse au résultat de test binaire d'une comparaison faite, entre une valeur de test stockée dans une entrée de table nodale et un segment de sélection de l'argument de recherche, et en ce que
a) si le résultat de test est une première valeur binaire (par exemple 0), la valeur de décalage est une première valeur donnée, sélectionnant une première entrée prédéterminée dans la table nodale sélectionnée par le pointeur de base de table (PTR), et
b) si le résultat de test est une deuxième valeur binaire (par exemple 1), la valeur de décalage est une deuxième valeur donnée, sélectionnant une deuxième entrée prédéterminée dans la table nodale, sélectionnée par le pointeur de base de table (PTR).

6. Procédé selon la revendication 1, comprenant les étapes suivantes :
- sélection d'une entrée de table nodale ;
- extraction d'une valeur de test (TV) de ladite entrée de table ou d'une entrée prédéterminée dans une autre table nodale, si l'application d'une valeur de test est indiquée ;
- sélection d'un segment à partir de l'argument de recherche comme argument de test, en réponse à l'information de sélection (CNT ; CNT1) associée à la valeur de test et contenue dans l'entrée de table sélectionnée ;
- comparaison de la valeur de test audit segment d'argument de test sélectionné de l'argument de recherche ; et
- utilisation du résultat de test pour déterminer l'étape suivante dans la procédure de recherche.

7. Procédé selon la revendication 6, dans lequel :
- un pointeur de base de table (PTR) est extrait de l'entrée de table nodale sélectionnée pour sélectionner une autre table nodale ; et
- ladite valeur de test (TV) est extraite d'une entrée prédéterminée de l'autre table nodale sélectionnée.

8. Procédé selon la revendication 6, dans lequel :
- un pointeur de base de table (PTR) est extrait de l'entrée de table nodale sélectionnée, pour sélectionner une autre table nodale ; et
- ladite valeur de test (TV) est également extraite de la même entrée de table nodale sélectionnée.

9. Procédé selon la revendication 6, dans lequel un pointeur de table de base (PTR) est extrait de l'entrée de table nodale sélectionnée, pour sélectionner une autre table nodale, et dans lequel, à la suite, d'autres sous-étapes sont exécutées en réponse au résultat de test binaire :
- SOIT une deuxième information de sélection (CNT2) est obtenue de l'entrée respective et utilisée pour extraire un autre segment de l'argument de recherche, qui à son tour est ensuite utilisé comme index pour déterminer une valeur de décalage pour accéder à une entrée dans l'autre table nodale sélectionnée ;
- SOIT un emplacement prédéterminé dans l'autre table nodale est l'objet d'accès.

10. Procédé selon la revendication 6, dans lequel un pointeur de table de base (PTR) est extrait de l'entrée de table nodale sélectionnée, pour sélectionnée une autre table nodale ; et
- selon le résultat de test binaire, l'une ou l'autre des deux entrées prédéterminées dans l'autre table nodale est l'objet d'accès.

11. Procédé selon la revendication 6, dans lequel, lorsqu'une indication de réutilisation (R) est contenue dans l'entrée respective, et lorsqu'un résultat prédéterminé, parmi deux résultats de test possibles, a été obtenu :
- une autre information de sélection (CNT2) est utilisée pour obtenir un autre segment sélectionné à partir de l'argument de recherche, qui est au moins partiellement identique à la totalité ou à une partie du segment d'argument de test, sélectionné antérieurement, de l'argument de recherche, et
- ledit autre segment sélectionné est ensuite utilisé, SOIT comme valeur d'index pour l'accès d'une autre entrée de table nodale, SOIT en tant qu'argument de test à comparer à une autre valeur de test.

12. Procédé selon la revendication 11, dans lequel :
- ledit autre segment sélectionné est une partie du segment d'argument de test utilisé antérieurement.

13. Procédé selon la revendication 11, dans lequel :
- ledit autre segment sélectionné est égal à ou inclut le segment d'argument de test utilisé antérieurement.

14. Structure de données stockée, comprenant des tables nodales ayant chacune une pluralité d'entrées, dans un système de détermination d'une sortie en réponse à un argument de recherche d'entrée donné, d'après une sélection de recherche des préfixes de correspondance les plus longs et en utilisant des opérations de consultation dans un agencement à niveaux multiples de tables nodales ;
- dans laquelle chaque entrée de table nodale fait soit l'objet d'un accès en réponse à un segment sélectionné de l'argument de recherche qui est utilisé comme index de table, soit fait l'objet d'un accès directement en réponse au résultat d'une opération de test de comparaison ;
lesdites entrées de table nodale incluant des entrées de base, contenant chacune au moins
- une indication d'opération (F1, F2) permettant la sélection d'au moins l'un des éléments suivants :
un test, un index, un test suivi d'un index, une dernière entrée ;
- une information de sélection (CNT ; CNT1, CNT2) pour sélectionner un segment de l'argument de recherche à utiliser comme index de table et/ou l'opération de test lorsque l'indication d'opération (F1, F2) ne correspond pas à la dernière entrée ; et
- un pointeur de base de table (PTR) identifiant la table nodale suivante à utiliser.

15. Structure de données stockée, tel qu'indiqué à la revendication 14, comprenant en outre :
- une valeur de test (TV) à comparer à un segment sélectionné de l'argument de recherche ; ou
- une indication de fin (FIN) qui est, soit un indicateur de sortie (NHP), soit un indicateur d'arrêt (NIL).

16. Structure de données stockée, tel qu'indiqué à la revendication 14, dans laquelle une entrée de base peut en plus comprendre :
- une deuxième information de sélection (CNT 2), pour extraire un autre segment dans l'argument de recherche durant le traitement de la même entrée.

17. Structure de données stockée, tel qu'indiqué à la revendication 14, dans laquelle au moins certaines des entrées de base dans une table nodale contiennent :
- deux éléments d'information de sélection (CNT1, CNT2) chacun pour sélectionner un segment de l'argument de recherche donné, l'un desdits segments sélectionnés constituant une valeur d'index pour l'accès d'une entrée dans un table nodale désignée par un pointeur de base de table (PTR), et l'autre desdits segments sélectionnés constituant un argument de test à comparer à une valeur de test (TV) stockée.

18. Structure de données stockée, tel qu'indiqué à la revendication 14, dans laquelle au moins l'une des tables nodales comprend :
a) une section ayant des entrées prédéterminées devant faire l'objet d'accès direct en réponse à un résultat de test, et
b) une autre section contenant des entrées devant faire l'objet d'accès, en réponse à une valeur de décalage dérivée d'une valeur d'index qui est un segment sélectionné de l'argument de recherche.

19. Structure de données stockée, tel qu'indiqué à la revendication 14, dans laquelle :
- au moins l'une des rentrées de base contient en plus une valeur de test (TV) devant être comparée à un segment sélectionné de l'argument de recherche.

20. Structure de données stockée, tel qu'indiqué à la revendication 14, dans laquelle
- au moins l'une des entrées de base contient, outre un pointeur de base de table (PTR) pour la table de noeud suivante devant être utilisée, une indication du fait qu'une valeur de test (TV) doit être utilisée, contenue en un emplacement prédéterminé de la table nodale suivante identifiée par ledit pointeur de base de table.

21. Structure de données stockée, tel qu'indiqué à la revendication 14, dans laquelle
- une entrée de base comprend un drapeau de réutilisation (R) indiquant que, après une sélection initiale d'un premier segment à partir de l'argument de recherche en tant qu'argument test, un autre segment doit être sélectionné à partir de l'argument de recherche, qui est au moins partiellement identique à la totalité ou à une partie du segment d'argument de recherche sélectionné antérieurement.
